# EUROPÄISCHE PATENTANMELDUNG

(11) **EP 0 779 349 A2**
(43) Veröffentlichungstag der Anmeldung: **18.06.1997**
(21) Anmeldenummer: 96120025.0
(22) Anmeldetag: 13.12.1996
(51) Int. Cl.: C09D 167/06

(54) **Überzugsmittel, Verfahren zur Herstellung von Mehrschichtüberzügen und Verwendung des Überzugsmittels**

(30) Priorität: 15.12.1995 DE 19546899
(71) Anmelder: Herberts Gesellschaft mit beschränkter Haftung, 42285 Wuppertal (DE)
(72) Erfinder: Becker, Heinz Dietholf, 53121 Bonn (DE); Bremer, Gerhard, 50226 Frechen (DE); Stephan, Werner, 42111 Wuppertal (DE)
(74) Vertreter: Türk, Gille, Hrabal, Leifert

(57) **Zusammenfassung**

Die Erfindung betrifft Überzugsmittel auf der Basis eines oder mehrerer styrolfreier, ungesättigter Polyesterharze, die
A) einen oder mehrere ungesättigte Polyester, erhältlich durch Umsetzung von
   a) 0,5 bis 1,0 Mol mindestens einer alpha,beta-ethylenisch ungesättigten Dicarbonsäure oder deren Anhydrid,
   b) 0 bis 0,5 Mol mindestens einer aromatischen, aliphatischen und/oder cycloaliphatischen gesättigten Dicarbonsäure oder deren Anhydrid,
   c) 0,4 bis 0,8 Mol mindestens eines aliphatischen gesättigten zweiwertigen Alkohols,
   d) 0,5 bis 1,2 Mol mindestens eines hydroxyfunktionellen Allylethers,
B) ein oder mehrere Polyglykoldiacrylate der allgemeinen Formel 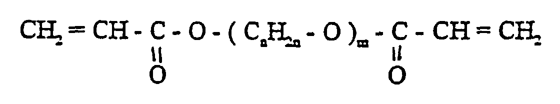 mit n = 2 - 5 und m = 2 - 5,
C) ein oder mehrere Initiatoren und
gegebenenfalls ein oder mehrere organische Lösemittel, ein oder mehrere Pigmente und/oder Füllstoffe sowie Beschleuniger, Katalysatoren und/oder lackübliche Additive enthalten.

## Beschreibung

Die Erfindung betrifft radikalisch härtbare und oxidativ trocknende Überzugsmittel auf Basis styrolfreier ungesättigter Polyesterharze, welche insbesondere Anwendung finden als Füller- und Spachtelmassen in der Fahrzeug- und Fahrzeugteilelackierung.

Handelsübliche Harze auf Basis ungesättigter Polyester (UP-Harze) enthalten in der Regel Styrol als copolymerisierbares Monomeres. Der Styrolgehalt in den Polyesterharzen liegt dabei üblicherweise zwischen 20 und 50 %. Ein wesentliches Anwendungsgebiet der styrolhaltigen UP-Harze ist die Autoreparatur- und die Autoserienlackierung, wobei die Polyesterharze überwiegend in Spachtel- und Füllermassen zum Einsatz kommen. Diese Überzugsmittel zeichnen sich durch schnelle Trocknung und sehr gute Schleifbarkeit aus.

In den meisten europäischen Staaten ist die maximale Arbeitsplatzkonzentration (MAK) für Monostyrol auf 50 ppm festgelegt. In der Bundesrepublik Deutschland wurde die maximale Arbeitsplatzkonzentration für Monostyrol von bisher 100 ppm auf 20 ppm reduziert. Bei der typischen Anwendung von Produkten auf Basis ungesättigter Polyesterharze in der Fahrzeuglackierung ist dieser MAK-Wert nur einzuhalten durch entsprechende Anlagentechnik (Objektabsaugung) oder Produkttechnologie. Für die Mehrzahl der Lackierbetriebe ist die entsprechende Anlagentechnik auf Grund der relativ hohen Investionskosten jedoch nicht realisierbar. D.h., es bleibt nur die Möglichkeit, die geforderten MAK-Werte über entsprechende Produktentwicklungen zu realisieren.

Das kann beispielsweise über die Entwicklung monomerenfreier ungesättigter Polyesterharze oder den Einsatz weiterer, von Styrol verschiedener polymerisierbarer Monomere als Reaktivverdünner erfolgen.

In der EP-A-0 154 924 werden monomerenfreie Spachtelmassen beschrieben, die aus ungesättigten Dicarbonsäuren, aliphatischen gesättigten Alkoholen und Trimethylolpropanmonoallylether hergestellt werden.

In der DE-A-41 22 765 werden weitere ungesättigte Polyester beschrieben, die frei von copolymerisierbaren Monomeren sind. Die Polyester sind gekennzeichnet durch einen Gehalt von 5 - 70 Gew.-% an Octadienylgruppen und einen Gehalt von 10 - 65 Gew.-% an Esterresten ungesättigter Dicarbonsäuren.

In der DE-A-42 26 520 sind radikalisch härtbare ungesättigte Polyester beschrieben, die sich im wesentlichen aus ungesättigten Dicarbonsäuren udn oxalkylierten Buten-2-diol-1,4 zusammensetzen. Es können 0 - 80 Gew.-% (Meth)acryloylgruppen oder Vinylethergruppen enthaltende Verbindungen enthalten sein.

Ein Einsatz dieser monomerenfrei aushärtbaren ungesättigten Polyester ist jedoch nur in hochgefüllten Spachteln möglich. Für Füllermassen sind diese Polyesterharze auf Grund des mangelhaften Spritzbildes und der zu langen Trockenzeiten sowie unzureichenden Schleifbarkeit nicht einsetzbar.

Die in der DE-A-43 21 533 beschriebenen Bindemittelsysteme enthalten ungesättigte Polyester, welche erhalten werden aus ungesättigten Dicarbonsäuren, hydroxyfunktionellen Allylethern und ethylenisch ungesättigten Verbindungen mit einer Oxirangruppe im Molekül. Diese Zusammensetzungen sind für Füller- und Spachtelmassen geeignet, haben jedoch den Nachteil, daß bei IR-Trocknung Oberflächenstörungen in Form von Blasenbildung auftreten.

In der DE-A-43 15 830 werden ungesättigte Polyesterharze für emissionsarme Beschichtungs- und Dichtungsmassen beschrieben, welche 40 - 90 Gew.-% eines Polyesters mit Acrylat- oder Methacrylatendgruppen, 10 - 60 Gew.-% eines Acrylat- oder Methacrylatcomonomeren mit einem Siedepunkt von mindestens 150°C und 0 - 50 Gew.-% anderer hochsiedender Monomere enthalten. Diese Polyesterharze werden zum Beschichten und Abdichten von Gebäudeteilen, wie Dächern, Terrassen, Fundamenten und Dachrinnen gegen den Einfluß von Wasser und aggressiven Medien verwendet und weisen dem Anwendungszweck entsprechende Eigenschaften, z.B. eine bestimmte Zugdehnung, auf. Als Harzgrundlage für Füller- und Spachtelmassen für die Fahrzeuglackierung sind diese Polyesterharze ungeeignet.

Aufgabe der Erfindung war es, emissionsarme styrolfreie Überzugsmittel bereitzustellen, die insbesondere als Füller- und Spachtelmassen in der Fahrzeuglackierung, insbesondere in der Fahrzeugreparaturlackierung eingesetzt werden können und die vergleichbar gute Eigenschaften wie die bisher üblichen styrolhaltigen Überzugsmittel aufweisen. Die Überzugsmittel sollen auch in dicken Schichten applizierbar sein und schnell trocknen sowie den Untergrund gut und sicher abdecken und problemlos schleifbar sein.

Die Aufgabe wird gelöst durch Überzugsmittel, enthaltend
A) einen oder mehrere ungesättigte Polyester, erhältlich durch Umsetzung von
   a) 0,5 bis 1,0 Mol mindestens einer alpha,beta-ethylenisch ungesättigten Dicarbonsäure oder deren Anhydrid,
   b) 0 bis 0,5 Mol mindestens einer aromatischen, aliphatischen und/oder cycloaliphatischen gesättigten Dicarbonsäure oder deren Anhydrid,
   c) 0,4 bis 0,8 Mol mindestens eines aliphatischen gesättigten zweiwertigen Alkohols,
   d) 0,5 bis 1,2 Mol mindestens eines hydroxyfunktionellen Allylethers,
B) ein oder mehrere Polyglykoldiacrylate der allgemeinen Formel 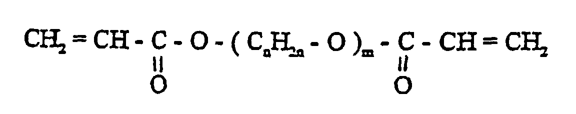 mit n = 2 - 5 und m = 2 - 5,
C) einen oder mehrere Initiatoren und
gegebenenfalls ein oder mehrere organische Lösemittel, ein oder mehrere Pigmente und/oder Füllstoffe sowie Beschleuniger, Katalysatoren und/oder lackübliche Additive.

Bevorzugt sind im Überzugsmittel 40 - 90 Gew.-% ungesättigte Polyester und 10 - 60 Gew.-% Polyglykoldiacrylate enthalten, wobei sich die Gew.-% zu 100 addieren sollen.

Die in den erfindungsgemäßen Überzugsmitteln als Komponente A) einsetzbaren ungesättigten Polyester weisen bevorzugt ein zahlenmittleres Molekulargewicht (Mn) von 500 - 1200 und eine Säurezahl von bevorzugt 5 - 50 mg KOH/g auf. Die Viskosität liegt bevorzugt bei 2000 - 5000 mPa.s.

Die Herstellung der erfindungsgemäß zu verwendenden Polyester kann nach bekannten Methoden, z.B. durch Schmelz- oder Azeotropveresterung der Alkohole und Säuren oder deren veresterungsfähigen Derivate erfolgen. Beispiele für solche Methoden sind in "Methoden der organischen Chemie" (Houben-Weyl), 4. Auflage, Band 14/2, 1961, Seiten 1 - 5, 21 - 33, 40 - 44 beschrieben. Um die erfindungsgemäß zu verwendenden Polyester vor vorzeitiger Vernetzung zu bewahren, ist es vorteilhaft, bereits bei der Herstellung der Polyester 0,001 bis 0,1 Gew.-% Polymerisationsinhibitoren zuzusetzen. Sehr gut geeignet ist beispielsweise p-Benzochinon als Polymerisationsinhibitor.

Zur Herstellung der erfindungsgemäß einsetzbaren Polyester geeignete Komponenten a) sind beispielsweise alpha,beta-ethylenisch ungesättigte Dicarbonsäuren oder deren Anhydride mit 4 - 10 C-Atomen im Molekül. Beispiele hierfür sind Maleinsäure, Maleinsäureanhydrid, Fumarsäure, Itaconsäure, Citraconsäure, Mesaconsäure. Bevorzugt sind Maleinsäure, Maleinsäureanhydrid und Fumarsäure.

Als Komponente b) können beispielsweise aromatische gesättigte Dicarbonsäuren, wie z.B. Phthalsäure, Iso- und Terephthalsäure, aliphatische gesättigte Dicarbonsäuren, wie z.B. Bernsteinsäure, Adipinsäure, Sebacinsäure und cycloaliphatische gesättigte Dicarbonsäuren, wie z.B. Hexahydro- und Tetrahydrophthalsäure, eingesetzt werden.

Bei der Komponente c) handelt es sich beispielsweise um gesättigte aliphatische zweiwertige Alkohole mit 2 - 8 Kohlenstoffatomen im Molekül. Beispiele hierfür sind Ethylenglykol, Propandiol-1,2, Propandiol-1,3, Butandiol-1,4, Pentandiol-1,3, Hexandiol-1,6 und 2-Ethylhexandiol-1,6. Bevorzugt sind Ethylenglykol und Propandiol-1,2.

Als Komponente d) werden beispielsweise mit Allylalkohol partiell veretherte Diole und/oder Polyole eingesetzt. Als Diole und Polyole kommen beispielsweise geradkettige oder verzweigte aliphatische Di- und Polyole in Betracht. Das sind bevorzugt definierte monomere Verbindungen. Die Polyole enthalten z.B. 3 - 6 OH-Gruppen, bevorzugt 3 - 5 OH-Gruppen. Beispiele für Komponente d) sind Trimethylolethanmonoallylether, Trimethylolethandiallylether, Trimethylolpropanmonoallylether, Trimethylolpropandiallylether, Pentaerythritmonoallylether, Pentaerythritdiallylether, Pentaerythrittrallylether, Glycerinmonoallylether. Bevorzugt werden Trimethylolpropanmonoallylether und Trimethylolpropandiallylether eingesetzt.

Beispiele für als Komponente A) einsetzbare ungesättigte Polyester sind beschrieben in den EP-A-0 154 924 und EP-A-0 368 083.

Im erfindungsgemäßen Überzugsmittel werden als copolymerisierbare Monomere Polyglykoldiacrylate der allgemeinen Formel 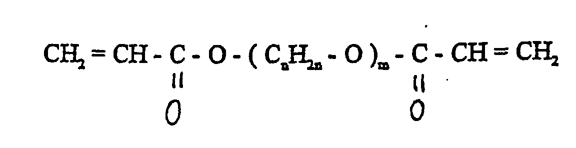 (Komponente B) eingesetzt.

Bevorzugte Polyglykoldiacrylate sind Diethylenglykoldiacrylat, Dipropylenglykoldiacrylat, Triethylenglykoldiacrylat, Tripropylenglykoldiacrylat. Besonders bevorzugt ist Dipropylenglykoldiacrylat.

Die Aushärtung der erfindungsgemäß eingesetzten ungesättigten Polyesterharze erfolgt über einen radikalischen Härtungsmechanismus. Die erfindungsgemäßen Überzugsmittel enthalten daher Initiatoren (Komponente C) für die radikalische Polymerisation. Als Initiatoren werden beispielsweise Peroxide, gegebenenfalls in Verbindung mit üblichen Beschleunigern, z.B. Metallsalzen und gegebenenfalls in Verbindung mit Katalysatoren eingesetzt. Als Peroxide können z.B. die üblichen Radikalinitiatoren Verwendung finden. Bevorzugte Peroxide sind tert.-Butylhydroperoxid, Cumolhydroperoxid, 2,5-Dimethylhexan-2,5-dihydropreoxid, Cyclohexanonhydroperoxid, Methylethylketonhydroperoxid und Diisopropylbenzolmonohydroperoxid. Besonders bevorzugt werden die Peroxide in Mengen von 1 - 1,5 Gew.-%, bezogen auf das gesamte Überzugsmittel zugesetzt. Die Peroxide können auch in phlegmatisierter Form eingesetzt werden. Ein Beispiel für ein übliches Phlegmatisierungsmittel sind Phthalsäureester. Beim Einsatz in phlegmatisierter Form werden im allgemeinen 2 - 3 Gew.-% der phlegmatisierten Peroxide verwendet.

Im Prinzip ist es auch möglich, die erfindungsgemäßen Überzugsmittel durch aktinisches Licht, beispielsweise durch UV-Licht, zu härten. Hierzu werden den Überzugsmitteln übliche Photoinitiatoren zugesetzt. Geeignete Photoinitiatoren sind beispielsweise solche, die im Wellenlängenbereich von 190 bis 400 nm absorbieren. Beispiele hierfür sind chlorhaltige aromatische Verbindungen, z.B. beschrieben in US-A-40 89 815, aromatische Ketone, wie in EP-A-0 003 002 und EP-A-0 161 463 beschrieben, Hydroxyalkylphenone, wie in US-A-43 47 111 beschrieben. Die Photoinitiatoren können beispielsweise in Mengen von 1 - 5 Gew.-%, bezogen auf das Überzugsmittel, zugesetzt werden.

Als Beschleuniger dienen für Radikalreaktionen übliche Beschleuniger, wie insbesondere Metallsalze, wie z.B. Cobalt- und Mangansalze von Säuren, wie Leinöl-, Tallöl- und Sojafettsäuren, Essigsäure. Die Beschleuniger werden in üblichen Mengen, beispielsweise von 0,01 bis 1 Gew.-%, bezogen auf das gesamt Überzugsmittel eingesetzt.

Katalysatoren sind für Radikalreaktionen übliche Katalysatoren. Bevorzugt werden dabei aromatische Amine, wie N,N-Dimethylanilin, N,N-Diethylanilin, N,N-Dimethyl-p-toluidin, Oxyethylanilin, 4-Dimethylaminobenzoesäure oder CH-acide Verbindungen, wie Acetylaceton, Acetessigester. Die Katalysatoren können beispielsweise in Mengen von 0 - 2 Gew.-%, bezogen auf das gesamte Überzugsmittel eingesetzt werden.

Die erfindungsgemäßen Überzugsmittel können geringe Mengen an organischen Lösemitteln enthalten. Als organische Lösemittel dienen beispielsweise solche, wie sie zur Formulierung von Füller- oder Spachtelmassen üblich sind. Beispiele hierfür sind Ester, wie Butylacetat und Ethylacetat, sowie Ketone, wie Methylethylketon. Im allgemeinen werden die Lösemittel bevorzugt in Mengen von nicht mehr als 5 Gew.-%, bezogen auf das fertige Überzugsmittel, eingesetzt.

Die erfindungsgemäßen Überzugsmittel können weiterhin Pigmente und/oder Füllstoffe enthalten. Diese Materialien werden beispielsweise in Mengen von 30 - 80 Gew.-%, bezogen auf das fertige Überzugsmittel eingesetzt. Es können für Überzugsmittel geeignete übliche organische und anorganische Pigmente und Füllstoffe verwendet werden. Beispiele für in Spachtel- und Füllermassen bevorzugt eingesetzte Pigmente sind anorganische Pigmente, wie Eisenoxidpigmente und Titandioxid. Beispiele für in Spachtel- und Füllermassen bevorzugt eingesetzte Füllstoffe sind insbesondere anorganische Füllstoffe, wie verschiedene Talkumarten, Siliziumdioxide, Magnesiumsilikate, Aluminiumsilikate und Bariumsulfate.

Den Überzugsmitteln können auch lackübliche Additive zugesetzt werden. Dabei kann es sich beispielsweise um Thixotropiemittel, Antiabsetzmittel, Entgasungs- und Verlaufsmittel und übliche Stabilisatoren handeln. Zur Stabilisierung der ungesättigten Polyester können den Überzugsmitteln übliche Polymerisationsinhibitoren oder Antioxidantien zugesetzt werden. Beispiele hierfür sind Hydrochinon, Resorcin, Phenothiazin, p-Benzochinon. Die zugesetzten Mengen liegen bei 10 bis 1000 ppm, bezogen auf das gesamte Überzugsmittel.

Zur Herstellung der erfindungsgemäßen Überzugsmittel können alle üblichen Mischaggregate, wie Dissolver, Planetmischer, Zwangskneter verwendet werden.

Die erfindungsgemäßen Überzugsmittel werden bevorzugt so bereitgestellt, daß sie zunächst keine Initiatoren enthalten. Die Initiatoren, z.B. die Peroxide, werden erst unmittelbar vor der Anwendung zugesetzt.

Die erfindungsgemäßen Überzugsmittel sind besonders geeignet zur Herstellung von Spachtel- und Füllerschichten eines lufttrocknenden oder forciert trocknenden Mehrschichtüberzuges. Mit den erfindungsgemäßen styrolfreien Überzugsmitteln werden vergleichbare gute Eigenschaften erreicht, wie sie bisher mit üblichen styrolhaltigen Materialien erhalten wurden. Die mit den erfindungsgemäßen Überzugsmitteln erhaltenen Überzüge ergeben ein sehr gutes Spritzbild und zeigen eine sehr gute Ablaufsicherheit (Stehvermögen an senkrechten Flächen). Die Überzüge sind nach 3 - 4 Stunden Trockenzeit problemlos schleifbar. Es kann jedoch auch eine Trocknung über Nacht bei Raumtemperatur erfolgen, und es ist eine Ofentrocknung bei 60°C (Trockenzeit 30 min.) möglich. Mittels IR-Trocknung läßt sich die Durchhärtung auf 10 - 15 Minuten verkürzen. Die Überzugsmittel können jedoch auch bei Temperaturen von z. B. 80 - 100 °C gehärtet werden. Die Überzugsmittel sind als Füllermassen in Trockenschichtdicken bis 500 µm applizierbar.

Die Applikation kann in üblicher Weise erfolgen. Sie richtet sich nach dem Verwendungszweck bzw. der Viskosität der eingesetzten Masse. So können höherviskose Massen, wie Spachtelmassen beispielsweise durch Aufstreichen oder Rakeln aufgebracht werden. Niedrigerviskose Massen, wie Füllermassen können durch Streichen oder auch durch Spritzauftrag appliziert werden.

Die erfindungsgemäßen Überzugsmittel können als Spachtel- oder Füllermassen auf verschiedenste Substrate bei der Herstellung von Mehrschichtlackierungen appliziert werden. Als Substrate geeignet sind beispielsweise verschiedene metallische Substrate, wie z.B. Stahl oder Zink, mit einem oder mehreren Überzügen versehene metallische Substrate oder auch Kunststoffsubstrate. Nach dem Trocknen und Schleifen können die erfindungsgemäßen Überzugsmittel problemlos mit üblichen Decklacken überlackiert werden. Dabei kann es sich um Einschichtdecklacke, z.B. auf 2K-Acrylat/Polyisocyanat-Basis, oder um übliche basecoat/clearcoat-Aufbauten handeln. Es kann mit lösemittelbasierenden oder wasserverdünnbaren Überzugsmitteln überlackiert werden. Die erfindungsgemäßen Überzugsmittel eignen sich besonders für die Fahrzeug- und Industrielackierung, insbesondere für die Reparaturlackierung auf dem Kraftfahrzeugsektor.

Die Erfindung betrifft auch Verfahren zur Herstellung von Mehrschichtüberzügen bzw. die Verwendung der Überzugsmittel zur Herstellung von Mehrschichtüberzügen, wobei insbesondere Spachtel- und Füllerschichten durch die erfindungsgemäßen Überzugsmittel erstellt werden.

Die folgenden Beispiele sollen die Erfindung erläutern. Alle Angaben beziehen sich auf das Gewicht.

### Beispiel 1

### Herstellung eines ungesättigten Polyesters

In einem mit einem Rührer, Wasserabscheider und Rückflußkühler ausgestattetem Dreihalskoben werden 1,0 Mol Maleinsäureanhydrid, 0,7 Mol Ethylenglykol und 1,0 Mol Trimethylolpropanmonoallylether bei 160 - 180°C unter einem Stickstoffstrom einer Schmelzkondensation unterworfen, bis eine Säurezahl von 19 mg KOH/g erreicht ist. Das erhaltene Produkt hat eine Viskosität von 3500 mPa.s.

### Herstellung eines Füllers

In einem gereinigten Behälter werden 36 Teile des obigen ungesättigten Polyesters, 0,6 Teile einer handelsüblichen 1 %igen Hydrochinonlösung und 8 Teile Dipropylenglykoldiacrylat vorgelegt und verrührt. Anschließend werden unter Rühren 0,5 Teile eines handelsüblichen Thixotropiemittels, 38 Teile Talkum, 0,3 Teile Eisenoxidpigmente und 6,0 Teile Titandioxid eingestreut und dispergiert. Danach werden 0,6 Teile eines handelsüblichen flüssigen Beschleunigers, 4 Teile Ethylacetat und 6 Teile Dipropylenglykoldiacrylat eingerührt.

### Vergleichsbeispiele 1 - 3

Es wird entsprechend obigem Beispiel vorgegangen. Anstelle von Dipropylenglykoldiacrylat werden jeweils Oligotriacrylat, Oligotetraacrylat und Butandioldimethacrylat eingesetzt. Kurz vor der Applikation werden jeweils zu allen Füllern 2 Gew.-% bezogen auf das gesamte Überzugsmittel einer handelsüblichen Peroxidlösung zugegeben.

### Applikationsbeispiel

Die Füllermassen entsprechend dem Beispiel 1, den Vergleichsbeispielen 1 - 3 sowie zum weiteren Vergleich ein üblicher styrolhaltiger Polyesterfüller werden in einer Trockenschichtdicke von 500 µm mittels Spritzauftrag auf Stahlbleche aufgetragen. Die Ergebnisse der lacktechnischen Beurteilung sind in der folgenden Tabelle dargestellt:

| | Viskosität | Verarbeitung | Stehvermögen | Trocknung/Schleifbarkeit | Lagerstabilität | Topfzeit (min) |
|---|---|---|---|---|---|---|
| Polyesterfüller styrolhaltig | 2 | 2 | 2 | 2 | 2 | 30 |
| Beispiel 1 Polyesterfüller mit DPGDA | 2 | 2-3 | 2 | 2-3 | 3 | 30 |
| Vergleichsbeispiel 1 Polyesterfüller mit OTA | 4 | 4 | 4 | 2-3 | 3-4 | 30 |
| Vergleichsbeispiel 2 Polyesterfüller mit PPTTA | 3 | 3 | 3 | 3 | 3-4 | 30 |
| Vergleichsbeispiel 3 Polyesterfüller mit BDDMA | 3 | 3 | 3 | 2-3 | 4 | 30 |
| DPGDA : Dipropylenglykoldiacrylat OTA : Oligotriacrylat (MW 480) PPTTA : Oligotetraacrylat (MW 560) BDDMA : Butandioldimethacrylat Benotung : 2 - gut 3 - befriedigend 4 - unzureichend | | | | | | |

## Patentansprüche

1. Überzugsmittel auf der Basis eines oder mehrerer styrolfreier, ungesättigter Polyesterharze, dadurch gekennzeichnet, daß es enthält
A) einen oder mehrere ungesättigte Polyester, erhältlich durch Umsetzung von
a) 0,5 bis 1,0 Mol mindestens einer alpha,beta-ethylenisch ungesättigten Dicarbonsäure oder deren Anhydrid,
b) 0 bis 0,5 Mol mindestens einer aromatischen, aliphatischen und/oder cycloaliphatischen gesättigten Dicarbonsäure oder deren Anhydrid,
c) 0,4 bis 0,8 Mol mindestens eines aliphatischen gesättigten zweiwertigen Alkohols,
d) 0,5 bis 1,2 Mol mindestens eines hydroxyfunktionellen Allylethers,
B) ein oder mehrere Polyglykoldiacrylate der allgemeinen Formel 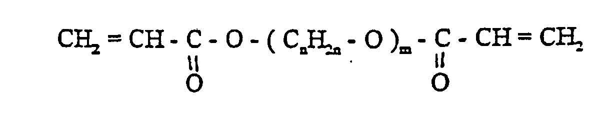 mit n = 2 - 5 und m = 2 - 5,
C) ein oder mehrere Initiatoren und
gegebenenfalls ein oder mehrere organische Lösemittel, ein oder mehrere Pigmente und/oder Füllstoffe sowie Beschleuniger, Katalysatoren und/oder lackübliche Additive.

2. Überzugsmittel nach Anspruch 1, dadurch gekennzeichnet, daß es 40 - 90 Gew.-% ungesättigte Polyester und 10 - 60 Gew.-% Polyglykoldiacrylate enthält, wobei die Summe der genannten Bestandteile 100 Gew.-% beträgt.

3. Überzugsmittel nach Anspruch 1 oder 2, dadurch gekennzeichnet, daß die als Komponente A) eingesetzten Polyester ein zahlenmittleres Molekulargewicht (Mₙ) von 500 - 1200 und eine Säurezahl von 5 - 50 mg KOH/g aufweisen.

4. Überzugsmittel nach einem der Ansprüche 1 bis 3, dadurch gekennzeichnet, daß die als Komponente A) eingesetzten Polyester eine Viskosität von 2000 - 5000 mPa.s besitzen.

5. Überzugsmittel nach einem der Ansprüche 1 bis 4, dadurch gekennzeichnet, daß es als Initiator 1,0 - 1,5 Gew.-% Peroxide, bezogen auf das gesamte Überzugsmittel enthält.

6. Verfahren zur Herstellung eines Mehrschichtüberzuges durch Aufbringen mehrerer härtbarer Überzugsschichten auf ein Substrat, dadurch gekennzeichnet, daß ein Überzugsmittel nach einem der Ansprüche 1 bis 5 zur Herstellung einer Spachtel- oder Füllerschicht verwendet wird.

7. Verwendung eines Überzugsmittels nach einem der Ansprüche 1 bis 6 zur Herstellung von Mehrschichtüberzügen.
